# EUROPÄISCHE PATENTSCHRIFT

(11) **EP 1 618 704 B1**
(45) Veröffentlichungstag und Bekanntmachung des Hinweises auf die Patenterteilung: **17.08.2011**
(21) Anmeldenummer: 04722858.0
(22) Anmeldetag: 24.03.2004
(51) Int. Cl.: H04L 12/24, H04L 29/06

(54) **VERFAHREN UND STEUERUNGSPROGRAMM ZUM BETRIEB EINES KOMMUNIKATIONSENDGERÄTS FÜR PAKETORIENTIERTE DATENÜBERMITTLUNG**
METHOD AND CONTROL PROGRAM FOR OPERATING A COMMUNICATION TERMINAL FOR PACKET-ORIENTED DATA TRANSMISSION
PROCEDE ET PROGRAMME DE COMMANDE PERMETTANT DE FAIRE FONCTIONNER UN TERMINAL DE COMMUNICATION POUR LA TRANSMISSION DE DONNEES ORIENTEE PAQUETS

(30) Priorität: 31.03.2003 DE 10314559
(43) Veröffentlichungstag der Anmeldung: 25.01.2006
(73) Patentinhaber: Siemens Enterprise Communications GmbH & Co. KG, 81379 München (DE)
(72) Erfinder: BERNDT, Stefan, 59199 Bönen (DE); BOZIONEK, Bruno, 33178 Borchen (DE); HINZ, Bernd, 33378 Rheda-Wiedenbrück (DE); LAUX, Thorsten, 33104 Paderborn (DE); NEUHAUS, Ralf, 44534 Lünen (DE); SCHEERING, Christian, 33689 Bielefeld (DE); UECKER, Rainer, 45470 Mühlheim (DE); ZIMMERMANN, Rainer, 33106 Paderborn (DE)
(74) Vertreter: Fritzsche, Thomas
(86) Internationale Anmeldenummer: PCT/EP2004/003131
(87) Internationale Veröffentlichungsnummer: WO 2004/088920

(56) Entgegenhaltungen:
- WO-A-01/31848
- US-B1- 6 230 281

## Beschreibung

Das Internet-Protokolls (IP) zur paketorientierten, verbindungslosen Datenübertragung wird nicht nur für einen reinen Datentransfer verwendet. Auch für Sprach- und Bildsignalübertragung ist eine Verwendung des Internet-Protokolls wegen zunehmender Installation IP-basierter Netze, wie Intranets und Extranets, eine interessante und kostengünstige Alternative zu herkömmlichen Kommunikationsstrukturen. Die Sprachsignalübertragung mittels des Internet-Protokolls, Voice-over-IP (VoIP), konkurriert insbesondere mit klassischen, verbindungsorientierten Sprachnetzen. Für die Nutzung des Internet-Protokolls zur Sprachsignalübertragung ist sein Echtzeitverhalten von zentraler Bedeutung. Das Echtzeitverhalten wird durch die Minimierung von Datenpaketverlusten und Verzögerungszeiten bestimmt, zumal Anwender bei der Sprachsignalübertragung nur minimale Verzögerungen akzeptieren.

Entscheidend für eine Akzeptanz von Voice-over-IP wird auch eine Einbindung und Nutzung von vorhandenen Telekommunikationssystemen sein. Auf Anwenderseite besteht nämlich großes wirtschaftliches Interesse an einer Weiternutzung bisheriger, konventioneller Telekommunikationssysteme einschließlich aller gewohnten Leistungsmerkmale. Voice-over-IP ist als Ablösung für konventionelle Nebenstellentechnik geplant und bietet eine Basis für eine weitergehende Integration von Sprach-, Daten- und Video-Diensten, beispielsweise im Rahmen von Multimediakonferenzen, Application Sharing oder Call-Center-Anwendungen. Aufgrund einer Vereinheitlichung von Betriebsfunktionen für Daten und Sprache können Synergiepotentiale ausgenutzt werden. Darüber hinaus ermöglicht Voice-over-IP standardisierte Umgebungen mit Schnittstellen zu konventionellen Telekommunikationssystemen einschließlich öffentlichen Telekommunikationsnetzen.

Mögliche Anwendungsszenarien für Voice-over-IP in einem Intranet sehen standortgebundene IP-Telefon-Gateways vor, über welche Gespräche von einer Telekommunikationsanlage geleitet werden. Einem solchen Gateway kommt die Aufgabe zu, Signalisierung, Standardprotokolle sowie herstellerspezifische Protokolle zu unterstützen. Derzeit weist Voice-over-IP einschließlich einer Integration in bestehende Telekommunikationsanlage noch einige Schwachpunkte auf hinsichtlich Signalisierung, verfügbarer Leistungsmerkmale und geeigneter Netzmanagement-Systeme. Bei letzteren umfassen Anforderungen eine gesamtheitliche Überwachung und Verwaltung von bislang getrennter Sprach- und der Datenkommunikation.

In zahlreichen VoIP-Telefonnetzen halten VoIP-Endgeräte Daten über ihren Zustand in einem dem jeweiligen VoIP-Endgerät zugeordneten Speicher. Der Gerätezustand umfaßt beispielsweise Angaben wie Rufnummer, programmierte Tastenbelegungen oder aktivierte Leistungsmerkmale. Üblicherweise ist einem VoIP-Endgerät in VoIP-Telefonnetzen eine als Gatekeeper bekannte Steuerungseinheit zugeordnet, die beispielsweise ein Weitervermitteln von Rufsignalisierungen sowie ein Auflösen oder Umwandeln von Netzwerkadressen oder Telefonnummern wahrnimmt. In der Regel sind Gatekeeper daher vor allem für Zugangsberechtigungen und Sicherheitsaspekte vorgesehen. Zusätzlich können Gatekeepern auch Aufgaben im Bereich der Gebührenerfassung, -zuweisung oder eines Bandbreitenmanagements zur Gewährleistung einer vorgegebenen Dienstgüte zugewiesen werden.

Fällt ein Gatekeeper in einem VoIP-Telefonnetz aus, so sind insbesondere VoIP-Endgeräte betroffen, die dadurch ihre Zuordnung im VoIP-Telefonnetz verlieren US6230281 offenbart ein Verfahren zur Übertragung eines Endgeräts zu einer zweiten Steuerungseinheit bei einem Ausfall einer ersten dem Endgerät zugeordneten Steuerungseinheit. Ein Sicherheitsproblem stellt in diesem Zusammenhang eine Neuzuordnung der betroffenen VoIP-Endgeräte, zu einem alternativen Gatekeeper dar, da die betroffenen VoIP-Endgeräte üblicherweise noch nicht durch den alternativen Gatekeeper registriert sind. Der vorliegenden Erfindung liegt daher die Aufgabe zugrunde, ein Verfahren zum Betrieb eines Kommunikationsendgeräts für paketorientierte Datenübermittlung sowie effiziente Realisierung des Verfahrens anzugeben, das ein sicheres Neuzuordnen des Kommunikationsendgeräts zu einer alternativen Steuerungseinheit nach Ausfall einer zuvor zugeordneten Steuerungseinheit ermöglicht.

Diese Aufgabe wird erfindungsgemäß durch ein Verfahren mit den in Anspruch 1 angegegebenen Merkmalen und ein Steuerungs-programm mit den in Anspruch 6 angegebenen Merkmalen gelöst. Vorteilhafte Weiterbildungen der vorliegenden Erfindung sind in den abhängigen Ansprüchen angegeben.

Ein wesentlicher Aspekt der vorliegenden Erfindung besteht darin, daß eine für ein Kommunikationsendgerät in einer zungeordneten Speichereinheit gespeicherte Zustandsinformation mit einer digitalen Signatur versehen wird. Die digitale Signatur wird aus der Zustandsinformation mittels eines privaten Schlüssels für ein asymmetrisches Verschlüsselungsverfahren berechnet, der einer dem Kommunikationsendgerät zugeordneten ersten Steuerungseinheit zur Auflösung bzw. Umwandlung von Netzwerkadressen zugeordnet ist. Bei einem Ausfall der ersten Steuerungseinheit wird eine die Zustandsinformation und die digitale Signatur umfassende Aufforderung zur Zuordnung des Kommunikationsendgeräts an zumindest eine zweite Steuerungseinheit übermittelt und die digitale Signatur verifiziert, beispielsweise durch die zweite Steuerungseinheit. Bei einem positiven Verifizierungsergebnis wird das Kommunikationsendgerät zur zweiten Steuerungseinheit zugeordnet. Auf diese Weise kann ein unberechtigtes Einschleusen eines VoIP-Endgeräts an einer zur Zuordnung vorgesehenen Steuerungseinheit, beispielsweise einem Gatekeeper, unterbunden werden.

Die vorliegende Erfindung wird nachfolgend an einem Ausführungsbeispiel anhand der Zeichnung näher erläutert. Es zeigt
- Figur 1: eine schematische Darstellung eines Anwendungsum- feldes der vorliegenden Erfindung,
- Figur 2: ein Ablaufdiagramm für ein Verfahren und Steue- rungsprogramm zum Betrieb eines Kommunikationsend- geräts für paketorientierte Datenübermittlung.

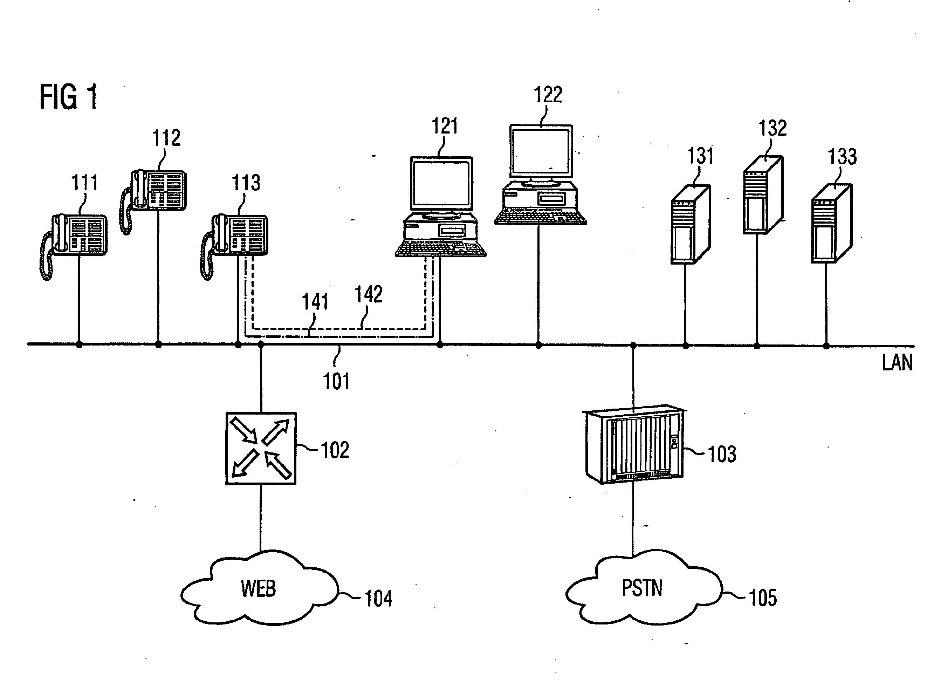

Das in Figur 1 schematisch dargestellte Anwendungsumfeld der vorliegenden Erfindung umfaßt ein lokales Paketdatennetz 101, welches mehrere VoIP-Telefone 111-113, PC-basierte Kommunikationsendgeräte 121-122, Gatekeeper 131-133, einen Rooter 102 und ein Gateway 103 miteinander verbindet. Die VoIP-Telefone 111-113 und die PC-basierten Kommunikationsendgeräte 121-122 stellen Kommuniktionsendgeräte für paketorientierte Datenübermittlung dar, wobei die VoIP-Telefone 111-113 lediglich einer Sprachsignaübermittlung dienen.

Die Gatekeeper 131-133 sind als zentrale Steuerungselemente für ein Weiterleiten von Rufsignalisierungen sowie eine Auflösung bzw. Umwandlung von Telefonnummern und Netzwerkadressen vorgesehen. Außerdem erfassen die Gatekeeper 131-133 Gebühren und weisen sie Netzbenutzern bzw. Diensten zu. Für Voice-over-IP stellen die Gatekeeper 131-133 wichtige Komponenten dar, da auf ihnen Software für ein Management von Zonen und Rufdiensten installiert ist, die dort abläuft.

Der Rooter 102 ist als Koppelelement zwischen dem lokalen Paketdatennetz 101 und einem weiteren IP-basierten Netz 104, beispielsweise dem Internet, vorgesehen und verbindet das lokale, IP-basierte Paketdatennetz 101 das weitere IP-basierte Netz 104 auf der Vermittlungsschicht gemäß dem OSI-Referenzmodell miteinander. Vornehmlich nimmt der Rooter 102 Aufgaben im Bereich Protokollumsetzung und Datenratenadaption wahr.

Das Gateway 103 umfaßt Hard- und Software um verschiedenartige Netze miteinander zu verbinden. Im vorliegenden Fall wird durch das Gateway 103 ein öffentliches Telefonnetz 105 durch Protokollumsetzung an das lokale, IP-basierte Paketdatennetz 101 angeschlossen. Das Gateway 103 hat insbesondere die Aufgabe, Nachrichten von einem Netz in ein anderes zu übermitteln, was vor allem eine Kommunikationsprotokolumwandlung erfordert. Ferner ist das Gateway 102 in der Lage, Protokolle vollständig aufzulösen, und stellt sowohl aus Sicht des öffentlichen Telefonnetzes 105 als auch aus Sicht des lokalen Paketdatennetzes 101 einen adressierbaren Netzknoten dar. Eine durch das Gateway 103 durchgeführte vollständige Protokollumwandlung umfaßt eine Umsetzung von Adressen und Formaten, eine Konvertierung der Codierung, eine Zwischenpufferung von Datenpaketen, eine Paketbestätigung, eine Flußkontrolle sowie eine Geschwindigkeitsanpassung.

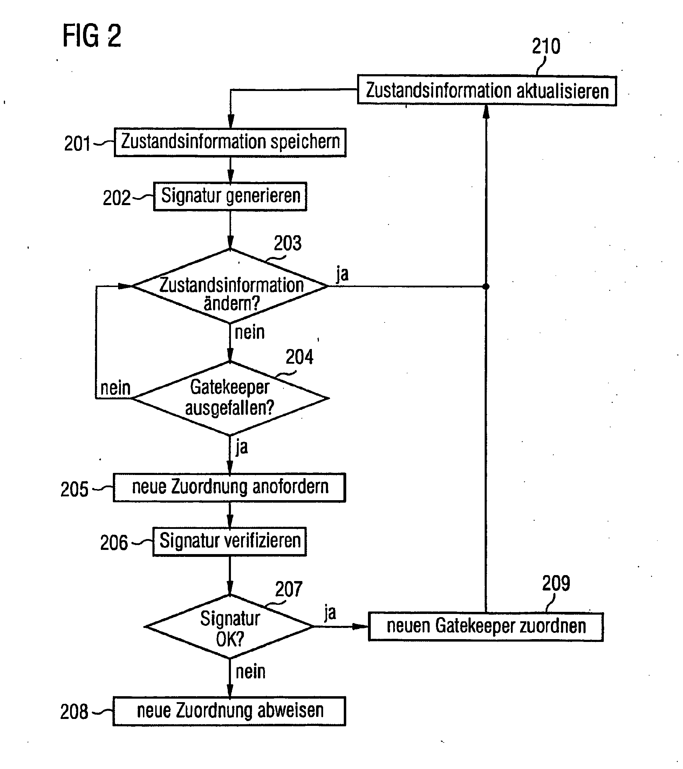

Für jedes der Kommunikationsendgeräte 111-113, 121-122 werden Zustandsinformationen in einer Speichereinheit des jeweiligen Kommunikationsendgeräts gespeichert. Diese Zustandsinformationen umfassen beispielsweise Ruflisten, Umleitungen programmierte Tastenbelegungen oder aktivierte Leistungsmerkmale oder Mehrwertdienste. Die Zustandsinformationen werden dabei als Datencontainer in der jeweiligen Speichereinheit verwaltet und durch einen dem jeweiligen Kommunikationsendgerät 111-113, 121-122 zugeordneten Gatekeeper 131 bis 133 laufend aktualisiert. Die Abspeicherung der Zustandsinformationen entspricht 201 des in Figur 2 dargestellten Ablaufdiagramms, die Aktualisierung der Zustandsinformationen entspricht Schritt 210.

Ferner wird eine digitale Signatur generiert (Schritt 202) mit der die jeweiligen Zustandsinformationen versehen werden. Die digitale Signatur wird jeweils aus den in dem jeweiligen Speicher gespeicherten Zustandsinformationen mittels eines privaten Schlüssels für ein asymmetrisches Verschlüsselungsverfahren berechnet und gemeinsam mit den Zustandsinformationen in der jeweiligen Speichereinheit gespeichert. Die jeweilige digitale Signatur wird dabei mittels des privaten Schlüssels berechnet, der dem zum jeweiligen Kommunikationsendgerät 111-113, 121-122 zugeordneten Gatekeeper 131-133 zugeordnet ist. Ein öffentlicher Schlüssel zur Verifizierung einer digitalen Signatur eines jeweiligen Gatekeepers 131-133 ist in den jeweils anderen Gatekeepern abrufbar hinterlegt. Im allgemeinen sind die öffentlichen Schlüssel so hinterlegt, daß diese für sämtliche Gatekeeper innerhalb einer IP-Telefonie-Domäne verfügbar sind.

Die laufende Aktualisierung der Zustandsinformationen spiegelt sich in Schritt 203, durch den abgefragt wird, ob eine Änderung von Zustandsinformation vorliegt, und in Schritt 210 wieder, durch den gegebenenfalls eine Zustandsinformation aktualisiert wird. Ein Ausfall eines einem Kommunitkationsgerät 111-113, 121-122 zunächst zugeordneten Gatekeepers 131 wird durch die vom Ausfall betroffenen Kommunikationsendgeräte festgestellt, wenn eine zyklische Aktualisierung von Zustandsinformtionen nicht mehr funktioniert. Dadurch sind die Kommunikationsendgeräte in der Lage, einen Ausfall eines Gatekeepers zu erkennen (Schritt 204).

Liegt ein Ausfall des zunächst zugeordneten Gatekeepers 131 tatsächlich vor, so übermitteln die von dem Ausfall betroffenen Kommunikationsendgeräte eine Meldung mit einer Aufforderung zur Zuordnung des jeweiligen Kommunikationsendgerätes an zumindest einen alternativen Gatekeeper 132-133. Die Meldung mit der Aufforderung zur Zuordnung der vom Ausfall betroffenen Kommunikationsendgeräte umfaßt die in den jeweiligen Kommunikationsendgeräten gespeicherten Zustandsinformationen einschließlich der digitalen Signatur. Vorzugsweise sollte in jedem Kommunikationsendgerät zusätzlich eine Liste mit alterantiven Gatekeepern abgespeichert sein, damit von einem Ausfall eines Gate-Keepers betroffene Kommunikationsendgeräte gleichverteilt einen alternativen Gatekeeper auswählen können. Auf diese Weise wird eine automatische Lastverteilung gewährleistet. Die Übermittlung der Meldung mit einer Aufforderung zur Zuordnung eines alternativen Gatekeepers entspricht Schritt 205 des in Figur 2 dargestellten Ablaufdiagramms.

Der alternative Gatekeeper 132-133, der eine Meldung mit einer Aufforderung zur Zuordnung eines Kommunikationsendgerätes empfangen hat, verifiziert zunächst die von der Meldung umfaßte digitale Signatur (Schritt 206). Wenn die digitale Signatur beispielsweise aus einem für die Zustandsinformationen ermittelten Hash-Wert berechnet ist, wird zur Verifizierung der digitalen Signatur durch einen der alternativen Gatekeeper 132-133 für die von einem Kommunikationsendgerät übermittelten Zustandsinformation ein Hash-Wert berechnet und dieser mit einer mittels eines dem ausgefallenen Gatekeeper 131 zugeordneten öffentliche Schlüssels entschlüsselten digitalen Signatur.auf Übereinstimmung verglichen. Zur Berechnung der digitalen Signatur kann beispielsweise ein Message-Diagest-No.5-Alghorithmus (MD5) verwendet werden. Zum Abschluß der Verifizierung der digitalen Signatur wird das Überprüfungsergebnis abgefragt, was sich in Schritt 207 des in Figur 2 dargestellten Ablaufdiagramms widerspiegelt.

Kann die digitale Signatur nicht erfolgreich verifiziert werden, so wird eine Neuzuordnung des jeweiligen vom Ausfall des zuvor zugeordneten Gatekeepers 131 betroffenen Kommunikationsendgerätes zu einem alternativen Gatekeeper 132-133 abgewiesen (Schritt 208). Bei einem positiven Verifizierungsergebnis wird das Kommunikationsendgerät zum jeweiligen alternativen Gatekeeper 132-133 zugeordnet (Schritt 209) und die Zustandsinformationen für das Kommunikationsendgerät gegebenenfalls aktualisiert (Schritt 210).

Das beschriebenen Verfahren zum Betrieb eines Kommunikationsendgerätes für paketorientierte Datenübermittlung kann beispielsweise in Form eines Steuerungsprogramms implementiert sein. Bei einer dezentralen Implementierung des Verfahrens sind in den Kommunikationsendgeräten Steuerungsprogramme installiert, die in einen Arbeitsspeicher eines jeweiligen PC-basierten Kommunikationsendgeräts ladbar sind und Codeabschnitte aufweisen, bei deren Ausführung die vorangehend beschriebenen Schritte durchgeführt bzw. veranlaßt werden, wenn das jeweilige Steuerungsprogramm im jeweiligen PC-basierten Kommunikationsendgerät abläuft. Schritte zur Verifizierung einer digitalen Signatur und zur Zuordnung eines neuen Gatekeepers können durch in den alternativen Gatekeepern installierte Steuerungsprogramme durchgeführt werden.

Die vorliegende Erfindung ist nicht auf das hier beschriebenen Ausführungsbeispiel beschränkt.

## Patentansprüche

1. Verfahren zum Betrieb eines Kommunikationsendgeräts (111-113, 121, 122) für paketorientierte Datenübermittlung, bei dem
- für ein Kommunikptionsendgerät zumindest eine Zustandsin-formation in einer dem Kommunikationsendgerät zugeordneten Speichereinheit gespeichert wird,
- die Zustandsinformation mit einer digitalen Signatur versehen wird, die aus der Zustandsinformation mittels eines privaten Schlüssels für ein asymmetrisches Verschlüsselungsverfahren, der einer dem Komanunikationsendgerät zugeordneten ersten Steuerungseinheit (131-133) zur Auflösung und/oder Umwandlung von Netzwerkadressen zugeordnet ist, berechnet wird,
- bei einem Ausfall der ersten Steuerungseinheit (131-133) eine die Zustandsinformation und die digitale Signatur umfassende Aufforderung zur Zuordnung des Kommunikationsendgeräts an zumindest eine zweite Steuerungseinheit (131-133) übermittelt und die digitale Signatur verifiziert wird,
- bei einem positiven Verifizierungsergebnis das Kommunikationsendgerät zur zweiten Steuerungseinheit zugeordnet wird.

2. Verfahren nach Anspruch 1,
bei dem die zumindest eine Zustandsinformation auf Veranlassung durch die erste oder zweite Steuerungseinheit zu einem vorgebbaren Zeitpunkt aktualisiert wird.

3. Verfahren nach einem der Ansprüche 1 oder 2,
bei dem die digitale Signatur aus einem für die Zustandsinformation ermittelten Hash-Wert berechnet ist.

4. Verfahren nach Anspruch 3,
bei dem zur Verifizierung der digitalen Signatur für die Zustandsinformation ein Hash-Wert berechnet und dieser mit einer mittels eines der ersten Steuerungseinheit zugeordneten
öffentlichen Schlüssels entschlüsselten digitalen Signatur auf Übereinstimmung verglichen wird.

5. Verfahren nach einem der Ansprüche 3 oder 4,
bei dem zur Berechnung der digitalen Signatur ein Message-Digest-No.5-Algorithmus verwendet wird.

6. Steuerungsprogramm zum Betrieb eines Kommunikationsendgeräts für paketorientierte Datenübermittlung, das in einen Arbeitsspeicher einer Recheneinrichtung ladbar ist und zumindest einen Codeabschnitt aufweist, bei dessen Ausführung
- für ein Kommunikationsendgerät zumindest eine Zustandsinformation in einer dem Kommunikationsendgerät zugeordneten Speichereinheit gespeichert wird (201),
- die Zustandsinformation mit einer digitalen Signatur versehen wird, die aus der Zustandsinformation mittels eines privaten Schlüssels für ein asymmetrisches Verschlüsselungsverfahren, der einer dem Kommunikationsendgerät zugeordneten ersten Steuerungseinheit zur Auflösung und/oder Umwandlung von Netzwerkadressen zugeordnet ist, berechnet ist (202),
- bei einem Ausfall der ersten Steuerungseinheit eine die Zustandsinformation und die digitale Signatur umfassende Aufforderung zur Zuordnung des Kommunikationsendgeräte an zumindest eine zweite Steuerungseinheit übermittelt (205) und eine verifizierung (206) der digitale Signatur veranlaßt wird,
- bei einem positiven Verifizierungsergebnis eine Zuordnung des Kommunikationsendgeräts zur zweiten Steuerungseinheit veranlaßt wird (209),
wenn das Steuerungsprogramm in der Recheneinrichtung abläuft.

## Claims

1. Method for operating a communication terminal (111-113, 121, 122) for packet-oriented data transmission, wherein
- at least one item of status information is stored for a communication terminal in a memory unit assigned to the communication terminal,
- the item of status information is provided with a digital signature which is calculated from the status information by means of a private key for an asymmetrical encryption method, said key being associated with a first control unit (131-133) that is assigned to the communication terminal for the resolution and/or conversion of network addresses,
- if the first control unit fails (131-133), a request to assign the communication terminal to at least one second control unit (131-133), said request comprising the item of status information and the digital signature, is transmitted and the digital signature is verified,
- if the result of the verification is positive, the communication terminal is assigned to the second control unit.

2. A method according to Claim 1,
wherein the at least one item of status information is updated at the instigation of the first or second control unit at a predefinable point in time.

3. A method according to either of Claims 1 or 2, wherein the digital signature is calculated from a hash value determined for the item of status information.

4. A method according to Claim 3,
wherein, to verify the digital signature for the item of status information, a hash value is calculated and this is compared to see if it matches a digital signature decrypted by means of a public key assigned to the first control unit.

5. A method according to either of Claims 3 or 4, wherein a Message-Digest No. 5 algorithm is used to calculate the digital signature.

6. A control programme for operating a communication terminal for packet-oriented data transmission, which can be loaded into a working memory of a processing device and which exhibits at least one code section during the execution of which
- at least one item of status information is stored for a communication terminal in a memory unit assigned to the communication terminal (201),
- the item of status information is provided with a digital signature which is calculated from the status information by means of a private key for an asymmetrical encryption method, said key being associated with a first control unit that is assigned to the communication terminal for the resolution and/or conversion of network addresses (202),
- if the first control unit fails, a request to assign the communication terminal to at least one second control unit, said request comprising the item of status information and the digital signature, is transmitted (205) and a verification (206) of the digital signature is initiated,
- if the verification result is positive an assignment of the communication terminal to the second control unit is initiated (209),
when the control programme runs in the processing device.

## Revendications

1. Procédé permettant de faire fonctionner un terminal de communication (111-113, 121, 122) pour la transmission de données orientée paquets, dans lequel
- pour un terminal de communication, au moins une information d'état est enregistrée dans une unité de mémoire associée au terminal de communication,
- l'information d'état est pourvue d'une signature numérique qui est calculée à partir de l'information d'état au moyen d'une clé privée pour un procédé de chiffrement asymétrique, ladite clé étant associée à une première unité de commande (131-133) associée au terminal de communication à des fins de résolution et/ou de conversion d'adresses de réseau,
- en cas de panne de la première unité de commande (131-133), une requête d'association du terminal de communication à au moins une deuxième unité de commande (131-133) est transmise, ladite requête comprenant la signature numérique, et la signature numérique est vérifiée,
- en cas d'un résultat de vérification positif, le terminal de communication est associé à la deuxième unité de commande.

2. Procédé selon la revendication 1,
dans lequel la au moins une information d'état est actualisée à l'initiative de la première ou de la deuxième unité de commande à un instant prédéfini.

3. Procédé selon l'une des revendications 1 ou 2,
dans lequel la signature numérique est calculée à partir d'une valeur de hachage déterminée pour l'information d'état.

4. Procédé selon la revendication 3,
dans lequel, lors la vérification de la signature numérique, une valeur de hachage est calculée pour l'information d'état et cette valeur est comparée avec une signature numérique déchiffrée au moyen d'une clé publique associée à la première unité de commande pour savoir si elle concorde.

5. Procédé selon l'une des revendications 3 ou 4,
dans lequel on emploie un algorithme MD5 (Message Digest n°5) pour calculer la signature numérique.

6. Programme de commande permettant de faire fonctionner un terminal de communication pour une transmission de données orientée paquets, qui peut être chargé dans une mémoire de travail d'un dispositif de calcul et comporte au moins une section de codes, au cours de l'exécution de laquelle
- pour un terminal de communication, au moins une information d'état est enregistrée (201) dans une unité de mémoire associée au terminal de communication
- l'information d'état est pourvue d'une signature numérique qui est calculée (202) à partir de l'information d'état au moyen d'une clé privée pour un procédé de chiffrement asymmétrique, ladite clé étant associée à une première unité de commande associée au terminal de communication à des fins de résolution et/ou de conversion d'adresses de réseau
- en cas de panne de la première unité de commande, une requête d'association du terminal de communication à au moins une deuxième unité de commande est transmise (205), ladite requête comprenant la signature électronique, et une vérification (206) de la signature numérique est ordonnée,
- en cas d'un résultat positif de la vérification, une association du terminal de communication à la deuxième unité de commande est ordonnée (209) lorsque le programme de commande se déroule dans le dispositif de calcul.
